# EUROPÄISCHE PATENTSCHRIFT

(11) **EP 2 398 597 B1**
(45) Veröffentlichungstag und Bekanntmachung des Hinweises auf die Patenterteilung: **24.01.2018**
(21) Anmeldenummer: 10704358.0
(22) Anmeldetag: 15.02.2010
(51) Int. Cl.: B07B 1/28, B07B 1/54, C08F 6/02

(54) **VERFAHREN ZUR HERSTELLUNG WASSERABSORBIERENDER POLYMERPARTIKEL**
METHOD FOR THE PRODUCTION OF WATER-ABSORBING POLYMER PARTICLES
PROCÉDÉ DE PRÉPARATION DE PARTICULES POLYMÈRES ABSORBANT L'EAU

(30) Priorität: 18.02.2009 EP 09153126
(43) Veröffentlichungstag der Anmeldung: 28.12.2011
(73) Patentinhaber: BASF SE, 67056 Ludwigshafen am Rhein (DE)
(72) Erfinder: FUNK, Rüdiger, 65527 Niedernhausen (DE); SCHRÖDER, Jürgen, 67071 Ludwigshafen (DE); BITZER, Emil, 67127 Rödersheim-Gronau (DE)
(74) Vertreter: BASF IP Association
(86) Internationale Anmeldenummer: PCT/EP2010/051830
(87) Internationale Veröffentlichungsnummer: WO 2010/094639

(56) Entgegenhaltungen:
- WO-A1-2008/037672
- DE-A1- 19 940 269
- GB-A- 543 326
- GB-A- 829 811
- US-A1- 2009 008 299

## Beschreibung

Die vorliegende Erfindung betrifft ein Verfahren zur Herstellung wasserabsorbierender Polymerpartikel umfassend eine Klassierung mittels einer Taumelsiebmaschine, wobei die zur Klassierung eingesetzte Taumelsiebmaschine mit mindestens einer Ballklopfreinigung ausgerüstet ist und mitgerissene Bälle außerhalb der Taumelsiebmaschine mittels einer Fangeinrichtung abgetrennt werden.

Wasserabsorbierende Polymerpartikel werden zur Herstellung von Windeln, Tampons, Damenbinden und anderen Hygieneartikeln, aber auch als wasserzurückhaltende Mittel im landwirtschaftlichen Gartenbau verwendet. Die wasserabsorbierenden Polymerpartikel werden auch als Superabsorber bezeichnet.

Die Herstellung wasserabsorbierender Polymerpartikel wird in der Monographie "Modern Superabsorbent Polymer Technology", F.L. Buchholz und A.T. Graham, Wiley-VCH, 1998, Seiten 71 bis 103, beschrieben.

Üblicherweise werden wasserabsorbierende Polymerpartikel durch Lösungspolymerisation hergestellt. Die durch Lösungspolymerisation erhaltenen Polymergele werden getrocknet, gemahlen und klassiert. Häufig werden die wasserabsorbierenden Polymerpartikel zusätzlich oberflächennachvernetzt und nochmals klassiert.

Die Klassierung wasserabsorbierender Polymerpartikel wird beispielsweise in EP 0 855 232 A2, DE 10 2005 001 789 A1, WO 2008/037672 A1, welches ein Verfahren gemäß dem Oberbegriff des Anspruchs 1 offenbart, WO 2008/037673 A1 und WO 2008/037675 A1 beschrieben.

Während der Klassierung können sich Polymerpartikel in den Siebmaschen verkanten, wodurch sich die freie Siebfläche und damit die Siebleistung vermindert.

Aufgabe der vorliegenden Erfindung war die Bereitstellung eines verbesserten Verfahrens zur Herstellung wasserabsorbierender Polymerpartikel, insbesondere ein hohe Siebleistung und eine leichte Abtrennung von Fremdkörpern.

Gelöst wurde die Aufgabe durch ein Verfahren zur Herstellung wasserabsorbierender Polymerpartikel durch Polymerisation einer Monomerlösung oder-suspension, enthaltend
a) mindestens ein ethylenisch ungesättigtes, säuregruppentragendes Monomer, das zumindest teilweise neutralisiert sein kann,
b) mindestens einen Vernetzer,
c) mindestens einen Initiator,
d) optional ein oder mehrere mit den unter a) genannten Monomeren copolymerisierbare ethylenisch ungesättigte Monomere und
e) optional ein oder mehrere wasserlösliche Polymere,
umfassend Trocknung, Mahlung und Klassierung mittels mindestens einer Taumelsiebmaschine, dadurch gekennzeichnet, dass die zur Klassierung eingesetzte Taumelsiebmaschine mit mindestens einer Ballklopfreinigung, bestehend aus einem Auflageboden mit elastischen Bällen unterhalb eines Siebes, ausgerüstet ist, die Bälle einen Anfangsdurchmesser x aufweisen und der Auflageboden Durchlassöffnungen für Partikel mit einem maximalen Partikeldurchmesser y aufweist, wobei y kleiner ist als x, und mitgerissene elastische Bälle außerhalb der Taumelsiebmaschine mittels einer Fangeinrichtung abgetrennt werden, wobei die Fangeinrichtung Durchlassöffnungen für Partikel mit einem maximalen Partikeldurchmesser z aufweist, wobei z kleiner ist als y.

Die für das erfindungsgemäße Klassierverfahren geeigneten Taumelsiebmaschinen unterliegen keiner Beschränkung. Für das erfindungsgemäße Verfahren einsetzbare Taumelsiebmaschinen sind beispielsweise bei ALLGAIER Werke GmbH, Uhingen, DE, und MINOX Siebtechnik GmbH, Offenbach/Queich, DE, erhältlich.

Bei einer Taumelsiebmaschine werden die zu klassierenden wasserabsorbierenden Polymerpartikel infolge einer erzwungenen Vibration spiralförmig über das Sieb bewegt. Der relativ lange Siebweg bei kleiner Siebfläche führt zu einer hohen Trennschärfe bei der Klassierung. Die erzwungene Vibration hat typischerweise eine Amplitude von 0,7 bis 40 mm, vorzugsweise von 1,5 bis 25 mm, und eine Frequenz von 1 bis 100 Hz, vorzugsweise von 5 bis 10 Hz.

Die im erfindungsgemäßen Verfahren einsetzbaren Taumelsiebmaschinen weisen vorzugsweise mindestens 2, besonders bevorzugt mindestens 3, ganz besonders bevorzugt mindestens 4, Siebe auf. Vorteilhaft werden dabei die vom oberen Sieb herabfallenden wasserabsorbierenden Polymerpartikel durch eine, vorzugsweise trichterförmige, Vorrichtung in Richtung Siebmitte des unteren Siebes abgelenkt.

Die Maschenweite der Siebe liegt vorzugsweise im Bereich von 100 bis 1.000 µm, besonders bevorzugt im Bereich von 125 bis 900 µm, ganz besonders bevorzugt im Bereich von 150 bis 850 µm.

Die wasserabsorbierenden Polymerpartikel weisen während des Klassierens vorzugsweise eine Temperatur von 40 bis 120°C, besonders bevorzugt von 45 bis 100°C, ganz besonders bevorzugt von 50 bis 80°C, auf.

Besonders vorteilhaft wird die Klassierung kontinuierlich durchgeführt. Der Durchsatz an wasserabsorbierenden Polymerpartikeln beträgt dabei üblicherweise mindestens 100 kg/m²·h, vorzugsweise mindestens 150 kg/m²·h, bevorzugt mindestens 200 kg/m²·h, besonders bevorzugt mindestens 250 kg/m²·h, ganz besonders bevorzugt mindestens 300 kg/m²·h.

Vorzugsweise werden die wasserabsorbierenden Polymerpartikel während des Klassierens mit einem Gasstrom, besonders bevorzugt Luft, überströmt. Die Gasmenge beträgt typischerweise von 0,1 bis 10 m³/h pro m² Siebfläche, vorzugsweise von 0,5 bis 5 m³/h pro m² Siebfläche, besonders bevorzugt von 1 bis 3 m³/h pro m² Siebfläche, wobei das Gasvolumen unter Standardbedingungen gemessen wird (25°C und 1 bar). Besonders bevorzugt wird der Gasstrom vor dem Eintritt in die Siebvorrichtung angewärmt, typischerweise auf eine Temperatur von 40 bis 120°C, vorzugsweise auf eine Temperatur von 50 bis 110°C, bevorzugt auf eine Temperatur von 60 bis 100°C, besonders bevorzugt auf eine Temperatur von 65 bis 90°C, ganz besonders bevorzugt auf eine Temperatur von 70 bis 80°C. Der Wassergehalt des Gasstroms beträgt typischerweise weniger 5 g/kg, vorzugsweise weniger als 4,5 g/kg, bevorzugt weniger als 4 g/kg, besonders bevorzugt weniger als 3,5 g/kg, ganz besonders bevorzugt weniger als 3 g/kg. Ein Gasstrom mit geringem Wassergehalt kann beispielsweise erzeugt werden, indem aus einem Gasstrom mit höherem Wassergehalt eine entsprechende Wassermenge durch Abkühlung auskondensiert wird.

In einer bevorzugten Ausführungsform der vorliegenden Erfindung werden mehrere Taumelsiebmaschinen parallel betrieben.

Die Taumelsiebmaschinen werden üblicherweise elektrisch geerdet.

Die Ballklopfreinigung besteht aus einem Auflageboden mit elastischen Bällen unterhalb eines Siebes. Infolge der Taumelbewegung der Siebmaschine springen die elastischen Bälle von unten gegen das Sieb und entfernen so verkantete wasserabsorbierende Polymerpartikel aus den Siebmaschen.

Die elastischen Bälle sind vorzugsweise aus Naturkautschuk, silikonmodifiziertem Ethylen-Propylen-Dien-Kautschuk (EPDM Silikon), Nitril-Butadien-Kautschuk (NBR), Styrol-Butadien-Kautschuk (SBR) oder Polyurethan und haben einen Anfangsdurchmesser x von vorzugsweise 15 bis 40 mm, besonders bevorzugt von 20 bis 35 mm, ganz besonders bvorzugt von 25 bis 30 mm.

Der Auflageboden weist Durchlassöffnungen für die zu klassierenden wasserabsorbierenden Polymerpartikel auf. Die Form der Durchlassöffnungen unterliegt keiner Beschränkung und es können bespielsweise kreisförmige, elliptische, quadratische, rechteckige oder trapezförmige Durchlassöffungen verwendet werden. Wichtig ist, dass die für die Ballklopfreinigung eingesetzten elastischen Bälle mit dem Anfangsdurchmesser x nicht durch die Durchlassöffnungen hindurchtreten können. Somit werden die elastischen Bälle im Bereich zwischen dem Auflageboden und dem darüberliegenden Sieb gehalten. Die zu klassierenden wasserabsorbierenden Polymerpartikel können dagegen durch die Durchlassöffnungen hindurchtreten und werden somit von dem Auflageboden nicht zurückgehalten.

Die Durchlassöffnungen des Auflagebodens sind daher nur für Partikel durchlässig, deren Partikeldurchmesser y kleiner ist als der Anfangsdurchmesser x der in der Ballklopfeinrichtung verwendeten Bälle. Der Partikeldurchmesser y ist vorzugsweise 1 bis 20 mm, besonders bevorzugt 2 bis 15 mm, ganz besonders bevorzugt 5 bis 10 mm, kleiner als der Anfangsdurchmesser x.

Beispielsweise könnten für die Ballklopfeinrichung elastische Bälle mit einem Anfangsdurchmesser x von 26 mm und ein Auflageboden mit kreisförmigen Durchlassöffnungen eingesetzt werden. Der Durchmesser der kreisförmigen Durchlassöffnungen könnte 20 mm betragen. Dieser Auflageboden hält elastischen Bälle mit einem Durchmesser von größer 20 mm wirksam zurück, während Partikel mit einem Partikeldurchmesser y von 20 mm oder weniger durch die Durchlassöffnungen hindurchtreten können.

Die Fangeinrichtung weist Durchlassöffnungen für die zu klassierenden wasserabsorbierenden Polymerpartikel auf. Die Form der Durchlassöffnungen unterliegt ebenfalls keiner Beschränkung und es können bespielsweise kreisförmige, elliptische, quadratische, rechteckige oder trapezförmige Durchlassöffungen verwendet werden. Die zu klassierenden wasserabsorbierenden Polymerpartikel können durch die Durchlassöffnungen hindurchtreten und werden somit von der Fangeinrichtung nicht zurückgehalten.

Der vorliegenden Erfindung liegt die Erkenntnis zugrunde, dass sich die in der Ballklopfeinrichtung verwendeten elastischen Bälle beim Betrieb der Taumelsiebmaschine abnutzen und der Durchmesser der elastischen Bälle über die Zeit abnimmt. Nach längeren Betrieb der Taumelsiebmaschine können daher abgenutzte elastische Bälle durch die Durchlassöffnungen des Auflagebodens hindurchtreten und die Taumelsiebmaschine zusammen mit der entsprechenden Siebfraktion an wasserabsorbierenden Polymerpartikeln verlassen. Üblicherweise würde man daher die abgenutzten elastischen Bälle rechtzeitig komplett durch neue elastische Bälle ersetzen. Durch die erfindungsgemäß einzusetzende Fangeinrichtung werden nun mitgerissene, d.h. durch eine Durchlassöffnung des Auflagebodens hindurchgetretene, abgenutzte elastische Bälle von den wasserabsorbierenden Polymerpartikeln abgetrennt. Damit können die Zeitintervalle, nach denen die elastischen Bälle ausgetauscht werden, deutlich verlängert und die Abstellzeiten der Taumelsiebmaschine deutlich vermindert werden.

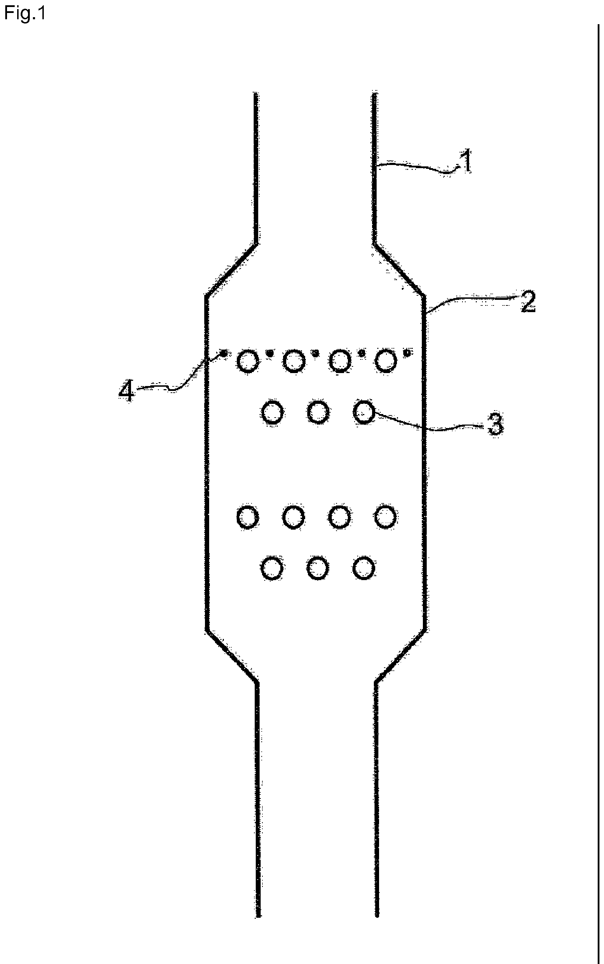

Die Durchlassöffnungen der Fangeinrichtung sind daher nur für Partikel durchlässig, deren Partikeldurchmesser z kleiner ist als der Partikeldurchmesser y. Der Partikeldurchmesser z ist vorzugsweise 0,1 bis 10 mm, besonders bevorzugt 0,2 bis 5 mm, ganz besonders bevorzugt 0,5 bis 2 mm, kleiner als der Partikeldurchmesser y. Vorteilhaft wird als Fangeinrichtung ein Magnetabscheider mit parallel angeordneten Rohrmagneten eingesetzt, wobei zwischen jeweils zwei Rohrmagneten mindestens ein Stab parallel zu den Rohrmagneten zusätzlich eingefügt sein kann. Die Figur 1 zeigt eine solche Fangeinrichtung, wobei die Bezugszeichen die folgende Bedeutung haben:
- 1: Produktstromleitung
- 2: Magnetabscheider
- 3: Rohrmagnet
- 4: Stab

Beispielsweise könnten für die Ballklopfeinrichung elastische Bälle mit einem Anfangsdurchmesser x von 26 mm, ein Auflageboden mit kreisförmigen Durchlassöffnungen und ein Magnetabscheider mit parallel angeordneten Rohrmagneten als Fangeinrichtung eingesetzt werden. Der Durchmesser der kreisförmigen Durchlassöffnungen könnte 20 mm und der Abstand der Rohrmagnete könnte 15 mm betragen. Abgenutzte elastische Bälle mit einem Durchmesser von 19 mm werden durch die die Durchlassöffnungen des Auflagebodens hindurchtreten, zusammen mit den wasserabsorbierenden Polymerpartikeln in den Magnetabscheider gelangen und dort zurückgehalten werden.

Die Rohrmagnete beladen sich während des Betriebes mit metallischen Verunreinungen sowie anhaftenden wasserabsorbierenden Polymerpartikeln und müssen daher regelmäßig gereinigt werden. Dazu werden die Rohrmagnete aus dem Magnetabscheider entfernt und die anhaftenden metallischen Verunreinigungen sowie wasserabsorbierende Polymerpartikel beispielsweise mittels eines Staubsaugers entfernt.

Zur leichteren Reinigung können Rohrmagnete in zusätzlichen, lösbaren Hülsen aus einem nicht-magnetisierbaren Material, beispielsweise Edelstahl, eingesetzt werden. An den zusätzlichen Hülsen abgeschiedenes Material lässt sich durch Herausziehen der Rohrmagnete leicht entfernen. Derartige Systeme sind beispielsweise unter der Bezeichnung EASY CLEAN Abreinigung (S+S Separation and Sorting Technology GmbH, Schönberg, DE) erhältlich. Nachteilig hierbei ist, dass die Magnetfeldstärke an der Wirkoberfläche und damit die Abscheiderate durch die Verwendung der zusätzlichen Hülsen sinkt.

Die Temperatur der wasserabsorbierenden Polymerpartikel im Magnetabscheider beträgt vorzugsweise von 30 bis 90°C, besonders bevorzugt von 40 bis 80°C, ganz besonders bevorzugt von 50 bis 70°C.

Der Feuchtegehalt der wasserabsorbierenden Polymerpartikel im im Magnetabscheider beträgt vorzugsweise von 1 bis 20 Gew.-%, besonders bevorzugt von 2 bis 10 Gew.-%, ganz besonders bevorzugt von 2,5 bis 5 Gew.-%, und wird gemäß der von der EDANA empfohlenen Testmethode Nr. WSP 230.2-05 "Moisture Content" bestimmt.

Die Verwendung von Magnetabscheidern bei der Herstellung wasserabsorbierender Polymerpartikel infolge der zusätzlichen mechanischen Belastung zu vermehrtem Abrieb führt. Die Magnetabscheidung ist häufig der letzte Verfahrensschritt bei der Herstellung wasserabsorbierender Polymerpartikel. Daher wird dieser Abrieb nicht mehr abgetrennt und verschlechtert somit die Produkteigenschaften.

Die mechanische Stabilität der wasserabsorbierenden Polymerpartikel kann durch Temperierung und zusätzlich durch Einstellung einer Mindestfeuchte deutlich erhöht werden. Zu hohe Temperaturen schwächen dagegen das Magnetfeld.

Zu hohe Feuchtegehalte in Verbindung mit zu hohen Temperaturen sind dagegen zu meiden, da die Klebrigkeit der wasserabsorbierenden Polymerpartikel in diesem Fall zunimmt.

Werden die wasserabsorbierenden Polymerpartikel bei höheren Temperaturen, beispielsweise größer 160°C, thermisch nachbehandelt, beispielsweise zur Oberflächennachvernetzung, so weisen die wasserabsorbierenden Polymerpartikel einen sehr niedrigen Feuchtegehalt auf. Daher ist es vorteilhaft den Feuchtegehalt der wasserabsorbierenden Polymerpartikel vor dem Magnetabscheider zu erhöhen.

Der Feuchtegehalt wird üblicherweise durch Zusatz von Wasser oder wässrigen Lösungen in geeigneten Mischeinrichtungen erhöht. Vorteilhaft werden Mischer mit schnell laufenden Mischwerkzeugen eingesetzt, da hierdurch die Verklumpungsneigung der wasserabsorbierenden Polymerpartikel minimiert wird. Weitere Einflussgrößen der Verklumpungsneigung sind die Temperatur der wasserabsorbierenden Polymerpartikel und die lonenstärke der zur Befeuchtung eingesetzten wässrigen Lösung. Die Verklumpungsneigung nimmt mit steigender Temperatur und steigender lonenstärke ab.

Die verwendeten Rohrmagnete weisen üblicherweise eine magnetische Flussdichte von mindestens 0,6 T, besonders bevorzugt von mindestens 0,9 T, ganz besonders bevorzugt von mindestens 1,1 T, auf.

Die Rohrmagnete des Magnetabscheiders befinden sich üblicherweise direkt in der Produktstromleitung. Die Produktstromleitung unterliegt keinen Beschränkungen. Geeignete Produktstromleitungen sind beispielsweise Rohrleitungen, in denen die wasserabsorbierenden Polymerpartikel pneumatisch oder gravimetrisch gefördert werden. Der Durchmesser der Produktstromleitung beträgt vorzugsweise von 5 bis 50 cm, besonders bevorzugt von 15 bis 40 cm, ganz besonders bevorzugt von 20 bis 35 cm.

Vorteilhaft wird der Magnetabscheider von oben nach unten durchströmt. Hierbei ist es möglich, dass die wasserabsorbierenden Polymerpartikel im Wesentlichen aufgrund ihres Eigengewichtes durch den Magnetabscheider geführt werden.

Der Abstand der Rohrmagnete ist so zu wählen, dass ein ausreichender Spalt für den Produktstrom zur Verfügung steht und andererseits eine ausreichende magnetische Feldstärke in der Spaltmitte gewährleistet ist.

Der Durchmesser der Rohrmagnete beträgt vorzugsweise von 5 bis 30 mm, besonders bevorzugt von 5 bis 20 mm, ganz besonders bevorzugt von 5 bis 10 mm. Die Spaltbreite zwischen den Rohrmagneten beträgt vorzugsweise von 5 bis 30 mm, besonders bevorzugt von 8 bis 25 mm, ganz besonders bevorzugt von 10 bis 20 mm.

Vorteilhaft werden mehrere Rohrmagnete nebeneinander und versetzt übereinander angeordnet. Dadurch wird die Abscheiderate des Magnetabscheiders erhöht.

Die Flächenbelastung des Magnetabscheiders beträgt vorzugsweise von 2 bis 15 g/cm²s, besonders bevorzugt von 4 bis 12 g/cm²s, ganz besonders bevorzugt von 6 bis 8 g/cm²s. Die Flächenbelastung ist die Produktmasse in g, die die Querschnittsfläche von 1 cm² senkrecht zur Produktstromrichtung in 1 s passiert.

Bei einer zu niedrigen Flächenbelastung können metallische Verunreinigungen in laminarer Strömung um die Rohrmagnete herumgeführt werden. Bei einer zu hohen Flächenbelastung können bereits abgeschiedene metallische Verunreinigungen wieder von den Rohrmagneten heruntergeschlagen werden.

Der Magnetabscheider kann zusätzlich noch von einem Gasstrom durchströmt werden, beispielsweise Luft oder technischer Stickstoff. Der Gasstrom weist einen Wassergehalt von vorzugsweise weniger als 5 g/kg, besonders bevorzugt von weniger als 4 g/kg, ganz besonders bevorzugt von weniger als 3 g/kg, auf.

Der vorliegenden Erfindung liegt die Erkenntnis zugrunde, dass die abgenutzten elastischen Bälle vorteilhaft im Magnetabscheider abgefangen werden können. Die Rohrmagnete des Magnetascheiders müssen häufig gereinigt werden und sind daher üblicherweise in herausnehmbaren Kassetten angeordnet. Durch geeignete Anpassung des Magnetabscheiders können abgenutzte elastische Bälle abgefangen und bei der üblichen Reinigung des Magnetabscheiders ohne zusätzlichen Aufwand entfernt werden.

Die mitgerissenen elastischen Bälle können auch vorteilhaft kontinuierlich ausgeschleust werden. Beispielsweise kann die Fangeinrichtung gegen die Horizontale geneigt sind, vorzugsweise um mindestens 10°, besonders bevorzugt um mindestens 30°, ganz bevorzugt um mindestens 50°. Auf diese Weise können die mitgerissenen elastischen Bälle kontinuierlich seitlich aus dem Produktstrom herausgeführt werden.

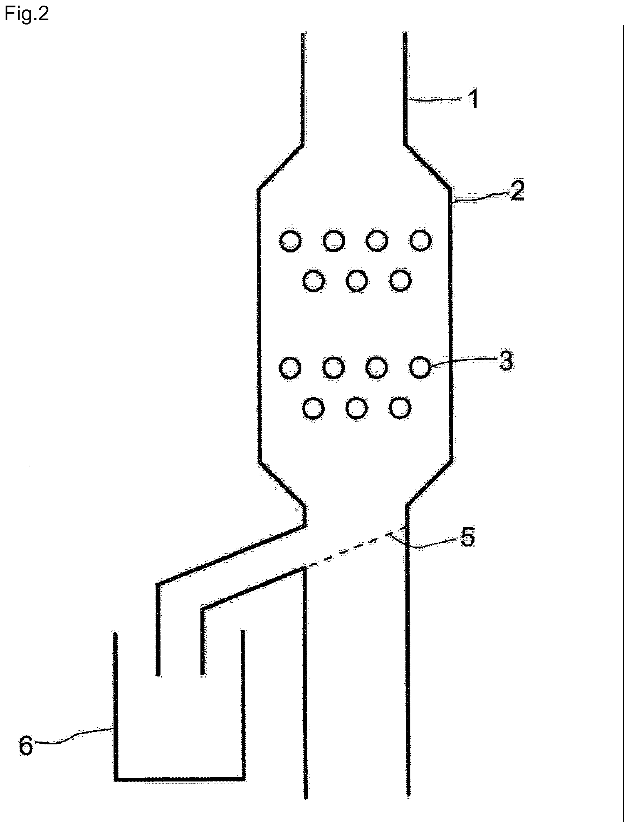

Die kontinuierliche Fangeinrichtung kann beispielsweise unterhalb eines Magnetabscheiders eingebaut werden. Die Figur 2 zeigt eine solche kontinuierliche Fangeinrichtung, wobei die Bezugszeichen die folgende Bedeutung haben:
- 1: Produktstromleitung
- 2: Magnetabscheider
- 3: Rohrmagnet
- 5: Fangeinrichtung
- 6: Auffangbehälter

Die wasserabsorbierenden Polymerpartikel werden durch Polymerisation einer Monomerlösung oder -suspension hergestellt und sind üblicherweise wasserunlöslich.

Die Monomeren a) sind vorzugsweise wasserlöslich, d.h. die Löslichkeit in Wasser bei 23°C beträgt typischerweise mindestens 1 g/100 g Wasser, vorzugsweise mindestens 5 g/100 g Wasser, besonders bevorzugt mindestens 25 g/100 g Wasser, ganz besonders bevorzugt mindestens 35 g/100 g Wasser.

Geeignete Monomere a) sind beispielsweise ethylenisch ungesättigte Carbonsäuren, wie Acrylsäure, Methacrylsäure, und Itaconsäure. Besonders bevorzugte Monomere sind Acrylsäure und Methacrylsäure. Ganz besonders bevorzugt ist Acrylsäure.

Weitere geeignete Monomere a) sind beispielsweise ethylenisch ungesättigte Sulfonsäuren, wie Styrolsulfonsäure und 2-Acrylamido-2-methylpropansulfonsäure (AMPS).

Verunreinigungen können einen erheblichen Einfluss auf die Polymerisation haben. Daher sollten die eingesetzten Rohstoffe eine möglichst hohe Reinheit aufweisen. Es ist daher oft vorteilhaft die Monomeren a) speziell zu reinigen. Geeignete Reinigungsverfahren werden beispielsweise in der WO 2002/055469 A1, der WO 2003/078378 A1 und der WO 2004/035514 A1 beschrieben. Ein geeignetes Monomer a) ist beispielsweise eine gemäß WO 2004/035514 A1 gereinigte Acrylsäure mit 99,8460 Gew.-% Acrylsäure, 0,0950 Gew.-% Essigsäure, 0,0332 Gew.-% Wasser, 0,0203 Gew.-% Propionsäure, 0,0001 Gew.-% Furfurale, 0,0001 Gew.-% Maleinsäureanhydrid, 0,0003 Gew.-% Diacrylsäure und 0,0050 Gew.-% Hydrochinonmonomethylether.

Der Anteil an Acrylsäure und/oder deren Salzen an der Gesamtmenge der Monomeren a) beträgt vorzugsweise mindestens 50 mol-%, besonders bevorzugt mindestens 90 mol-%, ganz besonders bevorzugt mindestens 95 mol-%.

Die Monomere a) enthalten üblicherweise Polymerisationsinhibitoren, vorzugsweise Hydrochinonhalbether, als Lagerstabilisator.

Die Monomerlösung enthält vorzugsweise bis zu 250 Gew.-ppm, bevorzugt höchstens 130 Gew.-ppm, besonders bevorzugt höchstens 70 Gew.-ppm, bevorzugt mindesten 10 Gew.-ppm, besonders bevorzugt mindesten 30 Gew.-ppm, insbesondere um 50 Gew.-ppm, Hydrochinonhalbether, jeweils bezogen auf das unneutralisierte Monomer a). Beispielsweise kann zur Herstellung der Monomerlösung ein ethylenisch ungesättigtes, säuregruppentragendes Monomer mit einem entsprechenden Gehalt an Hydrochinonhalbether verwendet werden.

Bevorzugte Hydrochinonhalbether sind Hydrochinonmonomethylether (MEHQ) und/oder alpha-Tocopherol (Vitamin E).

Geeignete Vernetzer b) sind Verbindungen mit mindestens zwei zur Vernetzung geeigneten Gruppen. Derartige Gruppen sind beispielsweise ethylenisch ungesättigte Gruppen, die in die Polymerkette radikalisch einpolymerisiert werden können, und funktionelle Gruppen, die mit den Säuregruppen des Monomeren a) kovalente Bindungen ausbilden können. Weiterhin sind auch polyvalente Metallsalze, die mit mindestens zwei Säuregruppen des Monomeren a) koordinative Bindungen ausbilden können, als Vernetzer b) geeignet.

Vernetzer b) sind vorzugsweise Verbindungen mit mindestens zwei polymerisierbaren Gruppen, die in das Polymernetzwerk radikalisch einpolymerisiert werden können. Geeignete Vernetzer b) sind beispielsweise Ethylenglykoldimethacrylat, Diethylenglykoldiacrylat, Polyethylenglykoldiacrylat, Allylmethacrylat, Trimethylolpropantriacrylat, Triallylamin, Tetraallylammoniumchlorid, Tetraallyloxyethan, wie in EP 0 530 438 A1 beschrieben, Di- und Triacrylate, wie in EP 0 547 847 A1, EP 0 559 476 A1, EP 0 632 068 A1, WO 93/21237 A1, WO 2003/104299 A1, WO 2003/104300 A1, WO 2003/104301 A1 und DE 103 31 450 A1 beschrieben, gemischte Acrylate, die neben Acrylatgruppen weitere ethylenisch ungesättigte Gruppen enthalten, wie in DE 103 31 456 A1 und DE 103 55 401 A1 beschrieben, oder Vernetzermischungen, wie beispielsweise in DE 195 43 368 A1, DE 196 46 484 A1, WO 90/15830 A1 und WO 2002/032962 A2 beschrieben.

Bevorzugte Vernetzer b) sind Pentaerythrittriallylether, Tetraalloxyethan, Methylenbismethacrylamid, 15-fach ethoxiliertes Trimethylolpropantriacrylat, Polyethylenglykoldiacrylat, Trimethylolpropantriacrylat und Triallylamin.

Ganz besonders bevorzugte Vernetzer b) sind die mit Acrylsäure oder Methacrylsäure zu Di- oder Triacrylaten veresterten mehrfach ethoxylierten und/oder propoxylierten Glyzerine, wie sie beispielsweise in WO 2003/104301 A1 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5-fach ethoxylierten und/oder propoxylierten Glyzerins. Am meisten bevorzugt sind die Triacrylate des 3-bis 5-fach ethoxylierten und/oder propoxylierten Glyzerins, insbesondere das Triacrylat des 3-fach ethoxylierten Glyzerins.

Die Menge an Vernetzer b) beträgt vorzugsweise 0,05 bis 1,5 Gew.-%, besonders bevorzugt 0,1 bis 1 Gew.-%, ganz besonders bevorzugt 0,3 bis 0,6 Gew.-%, jeweils bezogen auf Monomer a). Mit steigendem Vernetzergehalt sinkt die Zentrifugenretentionskapazität (CRC) und die Absorption unter einem Druck von 21,0 g/cm² durchläuft ein Maximum.

Als Initiatoren c) können sämtliche unter den Polymerisationsbedingungen Radikale erzeugende Verbindungen eingesetzt werden, beispielsweise thermische Initiatoren, Redox-Initiatoren, Photoinitiatoren. Geeignete Redox-Initiatoren sind Natriumperoxodisulfat/Ascorbinsäure, Wasserstoffperoxid/Ascorbinsäure, Natriumperoxodisulfat/Natriumbisulfit und Wasserstoffperoxid/Natriumbisulfit. Vorzugsweise werden Mischungen aus thermischen Initiatoren und Redox-Initiatoren eingesetzt, wie Natriumperoxodisulfat/Wasserstoffperoxid/Ascorbinsäure. Als reduzierende Komponente wird aber vorzugsweise ein Gemisch aus dem Natriumsalz der 2-Hydroxy-2-sulfinatoessigsäure, dem Dinatriumsalz der 2-Hydroxy-2-sulfonatoessigsäure und Natriumbisulfit eingesetzt. Derartige Gemische sind als Brüggolite® FF6 und Brüggolite® FF7 (Brüggemann Chemicals; Heilbronn; DE) erhältlich.

Mit den ethylenisch ungesättigten, säuregruppentragenden Monomeren a) copolymerisierbare ethylenisch ungesättigte Monomere d) sind beispielsweise Acrylamid, Methacrylamid, Hydroxyethylacrylat, Hydroxyethylmethacrylat, Dimethylaminoethylmethacrylat, Dimethylaminoethylacrylat, Dimethylaminopropylacrylat, Diethylaminopropylacrylat, Dimethylaminoethylmethacrylat, Diethylaminoethylmethacrylat.

Als wasserlösliche Polymere e) können Polyvinylalkohol, Polyvinylpyrrolidon, Stärke, Stärkederivate, modifizierte Cellulose, wie Methylcellulose oder Hydroxyethylcellulose, Gelatine, Polyglykole oder Polyacrylsäuren, vorzugsweise Stärke, Stärkederivate und modifizierte Cellulose, eingesetzt werden.

Üblicherweise wird eine wässrige Monomerlösung verwendet. Der Wassergehalt der Monomerlösung beträgt vorzugsweise von 40 bis 75 Gew.-%, besonders bevorzugt von 45 bis 70 Gew.-%, ganz besonders bevorzugt von 50 bis 65 Gew.-%. Es ist auch möglich Monomersuspensionen, d.h. Monomerlösungen mit überschüssigem Monomer a), beispielsweise Natriumacrylat, einzusetzen. Mit steigendem Wassergehalt steigt der Energieaufwand bei der anschließenden Trocknung und mit sinkendem Wassergehalt kann die Polymerisationswärme nur noch ungenügend abgeführt werden.

Die bevorzugten Polymerisationsinhibitoren benötigen für eine optimale Wirkung gelösten Sauerstoff. Daher kann die Monomerlösung vor der Polymerisation durch Inertisierung, d.h. Durchströmen mit einem inerten Gas, vorzugsweise Stickstoff oder Kohlendioxid, von gelöstem Sauerstoff befreit und der in der Monomerlösung enthaltende Polymerisationsinhibitor deaktiviert werden. Vorzugsweise wird der Sauerstoffgehalt der Monomerlösung vor der Polymerisation auf weniger als 1 Gew.-ppm, besonders bevorzugt auf weniger als 0,5 Gew.-ppm, ganz besonders bevorzugt auf weniger als 0,1 Gew.-ppm, gesenkt.

Geeignete Reaktoren sind beispielsweise Knetreaktoren oder Bandreaktoren. Im Kneter wird das bei der Polymerisation einer wässrigen Monomerlösung oder -suspension entstehende Polymergel durch beispielsweise gegenläufige Rührwellen kontinuierlich zerkleinert, wie in WO 2001/038402 A1 beschrieben. Die Polymerisation auf dem Band wird beispielsweise in DE 38 25 366 A1 und US 6,241,928 beschrieben. Bei der Polymerisation in einem Bandreaktor entsteht ein Polymergel, das in einem weiteren Verfahrensschritt zerkleinert werden muss, beispielsweise in einem Extruder oder Kneter.

Es ist aber auch möglich eine wässrige Monomerlösung zu vertropfen und die erzeugten Tropfen in einem erwärmten Trägergasstrom zu polymerisieren. Hierbei können die Verfahrensschritte Polymerisation und Trocknung zusammengefasst werden, wie in WO 2008/040715 A2 und WO 2008/052971 A1 beschrieben.

Die Säuregruppen der erhaltenen Polymergele sind üblicherweise teilweise neutralisiert. Die Neutralisation wird vorzugsweise auf der Stufe der Monomeren durchgeführt. Dies geschieht üblicherweise durch Einmischung des Neutralisationsmittels als wässrige Lösung oder bevorzugt auch als Feststoff. Der Neutralisationsgrad beträgt vorzugsweise von 25 bis 95 mol-%, besonders bevorzugt von 30 bis 80 mol-%, ganz besonders bevorzugt von 40 bis 75 mol-%, wobei die üblichen Neutralisationsmittel verwendet werden können, vorzugsweise Alkalimetallhydroxide, Alkalimetalloxide, Alkalimetallkarbonate oder Alkalimetallhydrogenkarbonate sowie deren Mischungen. Statt Alkalimetallsalzen können auch Ammoniumsalze verwendet werden. Natrium und Kalium sind als Alkalimetalle besonders bevorzugt, ganz besonders bevorzugt sind jedoch Natriumhydroxid, Natriumkarbonat oder Natriumhydrogenkarbonat sowie deren Mischungen.

Es ist aber auch möglich die Neutralisation nach der Polymerisation auf der Stufe des bei der Polymerisation entstehenden Polymergels durchzuführen. Weiterhin ist es möglich bis zu 40 mol-%, vorzugsweise 10 bis 30 mol-%, besonders bevorzugt 15 bis 25 mol-%, der Säuregruppen vor der Polymerisation zu neutralisieren indem ein Teil des Neutralisationsmittels bereits der Monomerlösung zugesetzt und der gewünschte Endneutralisationsgrad erst nach der Polymerisation auf der Stufe des Polymergels eingestellt wird. Wird das Polymergel zumindest teilweise nach der Polymerisation neutralisiert, so wird das Polymergel vorzugsweise mechanisch zerkleinert, beispielsweise mittels eines Extruders, wobei das Neutralisationsmittel aufgesprüht, übergestreut oder aufgegossen und dann sorgfältig untergemischt werden kann. Dazu kann die erhaltene Gelmasse noch mehrmals zur Homogenisierung extrudiert werden.

Das Polymergel wird dann vorzugsweise mit einem Bandtrockner getrocknet bis der Restfeuchtegehalt vorzugsweise 0,5 bis 15 Gew.-%, besonders bevorzugt 1 bis 10 Gew.-%, ganz besonders bevorzugt 2 bis 8 Gew.-%, beträgt, wobei der Restfeuchtegehalt gemäß der von der EDANA empfohlenen Testmethode Nr. WSP 230.2-05 "Moisture Content" bestimmt wird. Bei einer zu hohen Restfeuchte weist das getrocknete Polymergel eine zu niedrige Glasübergangstemperatur T_{g} auf und ist nur schwierig weiter zu verarbeiten. Bei einer zu niedrigen Restfeuchte ist das getrocknete Polymergel zu spröde und in den anschließenden Zerkleinerungsschritten fallen unerwünscht große Mengen an Polymerpartikeln mit zu niedriger Partikelgröße (Feinkorn) an. Der Feststoffgehalt des Gels beträgt vor der Trocknung vorzugsweise von 25 und 90 Gew.-%, besonders bevorzugt von 35 bis 70 Gew.-%, ganz besonders bevorzugt von 40 bis 60 Gew.-%. Wahlweise kann zur Trocknung aber auch ein Wirbelbetttrockner oder ein Schaufeltrockner verwendet werden.

Das getrocknete Polymergel wird hiernach gemahlen und klassiert, wobei zur Mahlung üblicherweise ein- oder mehrstufige Walzenstühle, bevorzugt zwei- oder dreistufige Walzenstühle, Stiftmühlen, Hammermühlen oder Schwingmühlen, eingesetzt werden können.

Die mittlere Partikelgröße der als Produktfraktion abgetrennten Polymerpartikel beträgt vorzugsweise mindestens 200 µm, besonders bevorzugt von 250 bis 600 µm, ganz besonders von 300 bis 500 µm. Die mittlere Partikelgröße der Produktfraktion kann mittels der von der EDANA empfohlenen Testmethode Nr. WSP 220.2-05 "Partikel Size Distribution" ermittelt werden, wobei die Massenanteile der Siebfraktionen kumuliert aufgetragen werden und die mittlere Partikelgröße graphisch bestimmt wird. Die mittlere Partikelgröße ist hierbei der Wert der Maschenweite, der sich für kumulierte 50 Gew.-% ergibt.

Der Anteil an Partikeln mit einer Partikelgröße von mindestens 150 µm beträgt vorzugsweise mindestens 90 Gew.-%, besonders bevorzugt mindesten 95 Gew.-%, ganz besonders bevorzugt mindestens 98 Gew.-%.

Polymerpartikel mit zu niedriger Partikelgröße senken die Permeabilität (SFC). Daher sollte der Anteil zu kleiner Polymerpartikel (Feinkorn) niedrig sein.

Zu kleine Polymerpartikel werden daher üblicherweise abgetrennt und in das Verfahren rückgeführt. Die geschieht vorzugsweise vor, während oder unmittelbar nach der Polymerisation, d.h. vor der Trocknung des Polymergels. Die zu kleinen Polymerpartikel können vor oder während der Rückführung mit Wasser und/oder wässrigem Tensid angefeuchtet werden.

Es ist auch möglich in späteren Verfahrensschritten zu kleine Polymerpartikel abzutrennen, beispielsweise nach der Oberflächennachvernetzung oder einem anderen Beschichtungsschritt. In diesem Fall sind die rückgeführten zu kleinen Polymerpartikel oberflächennachvernetzt bzw. anderweitig beschichtet, beispielsweise mit pyrogener Kieselsäure.

Wird zur Polymerisation ein Knetreaktor verwendet, so werden die zu kleinen Polymerpartikel vorzugsweise während des letzten Drittels der Polymerisation zugesetzt.

Werden die zu kleinen Polymerpartikel sehr früh zugesetzt, beispielsweise bereits zur Monomerlösung, so wird dadurch die Zentrifugenretentionskapazität (CRC) der erhaltenen wasserabsorbierenden Polymerpartikel gesenkt. Dies kann aber beispielsweise durch Anpassung der Einsatzmenge an Vernetzer b) kompensiert werden.

Werden die zu kleinen Polymerpartikel sehr spät zugesetzt, beispielsweise erst in einem dem Polymerisationsreaktor nachgeschalteten Apparat, beispielsweise einem Extruder, so lassen sich die zu kleinen Polymerpartikel nur noch schwer in das erhaltene Polymergel einarbeiten. Unzureichend eingearbeitete zu kleine Polymerpartikel lösen sich aber während der Mahlung wieder von dem getrockneten Polymergel, werden beim Klassieren daher erneut abgetrennt und erhöhen die Menge rückzuführender zu kleiner Polymerpartikel.

Der Anteil an Partikeln mit einer Partikelgröße von höchstens 850 µm, beträgt vorzugsweise mindestens 90 Gew.-%, besonders bevorzugt mindesten 95 Gew.-%, ganz besonders bevorzugt mindestens 98 Gew.-%.

Vorteilhaft beträgt der Anteil an Partikeln mit einer Partikelgröße von höchstens 600 µm, beträgt vorzugsweise mindestens 90 Gew.-%, besonders bevorzugt mindesten 95 Gew.-%, ganz besonders bevorzugt mindestens 98 Gew.-%.

Polymerpartikel mit zu großer Partikelgröße senken die Anquellgeschwindigkeit. Daher sollte der Anteil zu großer Polymerpartikel ebenfalls niedrig sein.

Zu große Polymerpartikel werden daher üblicherweise abgetrennt und in die Mahlung des getrockneten Polymergels rückgeführt.

Die Polymerpartikel können zur weiteren Verbesserung der Eigenschaften oberflächennachvernetzt werden. Geeignete Oberflächennachvernetzer sind Verbindungen, die Gruppen enthalten, die mit mindestens zwei Carboxylatgruppen der Polymerpartikel kovalente Bindungen bilden können. Geeignete Verbindungen sind beispielsweise polyfunktionelle Amine, polyfunktionelle Amidoamine, polyfunktionelle Epoxide, wie in EP 0 083 022 A2, EP 0 543 303 A1 und EP 0 937 736 A2 beschrieben, di- oder polyfunktionelle Alkohole, wie in DE 33 14 019 A1, DE 35 23 617 A1 und EP 0 450 922 A2 beschrieben, oder ß-Hydroxyalkylamide, wie in DE 102 04 938 A1 und US 6,239,230 beschrieben.

Des weiteren sind in DE 40 20 780 C1 zyklische Karbonate, in DE 198 07 502 A1 2-Oxazolidon und dessen Derivate, wie 2-Hydroxyethyl-2-oxazolidon, in
DE 198 07 992 C1 Bis- und Poly-2-oxazolidinone, in DE 198 54 573 A1 2-Oxotetrahydro-1,3-oxazin und dessen Derivate, in DE 198 54 574 A1 N-Acyl-2-Oxazolidone, in DE 102 04 937 A1 zyklische Harnstoffe, in DE 103 34 584 A1 bizyklische Amidacetale, in EP 1 199 327 A2 Oxetane und zyklische Harnstoffe und in WO 2003/031482 A1 Morpholin-2,3-dion und dessen Derivate als geeignete Oberflächennachvernetzer beschrieben.

Bevorzugte Oberflächennachvernetzer sind Glyzerin, Ethylenkarbonat, Ethylenglykoldiglycidylether, Umsetzungsprodukte von Polyamiden mit Epichlorhydrin und Gemische aus Propylenglykol und 1,4-Butandiol.

Ganz besonders bevorzugte Oberflächennachvernetzer sind 2-Hydroxyethyloxazolidin-2-on, Oxazolidin-2-on und 1,3-Propandiol.

Weiterhin können auch Oberflächennachvernetzer eingesetzt werden, die zusätzliche polymerisierbare ethylenisch ungesättigte Gruppen enthalten, wie in DE 37 13 601 A1 beschrieben

Die Menge an Oberflächennachvernetzer beträgt vorzugsweise 0,001 bis 2 Gew.-%, besonders bevorzugt 0,02 bis 1 Gew.-%, ganz besonders bevorzugt 0,05 bis 0,2 Gew.-%, jeweils bezogen auf die Polymerpartikel.

In einer bevorzugten Ausführungsform der vorliegenden Erfindung werden vor, während oder nach der Oberflächennachvernetzung zusätzlich zu den Oberflächennachvernetzern polyvalente Kationen auf die Partikeloberfläche aufgebracht.

Die im erfindungsgemäßen Verfahren einsetzbaren polyvalenten Kationen sind beispielsweise zweiwertige Kationen, wie die Kationen von Zink, Magnesium, Kalzium, Eisen und Strontium, dreiwertige Kationen, wie die Kationen von Aluminium, Eisen, Chrom, Seltenerden und Mangan, vierwertige Kationen, wie die Kationen von Titan und Zirkonium. Als Gegenion sind Chlorid, Bromid, Sulfat, Hydrogensulfat, Karbonat, Hydrogenkarbonat, Nitrat, Phosphat, Hydrogenphosphat, Dihydrogenphosphat und Carboxylat, wie Acetat und Laktat, möglich. Aluminiumsulfat und Aluminiumlaktat sind bevorzugt. Außer Metallsalzen können auch Polyamine als polyvalente Kationen eingesetzt werden.

Die Einsatzmenge an polyvalentem Kation beträgt beispielsweise 0,001 bis 1,5 Gew.-%, vorzugsweise 0,005 bis 1 Gew.-%, besonders bevorzugt 0,02 bis 0,8 Gew.-%. jeweils bezogen auf die Polymerpartikel.

Die Oberflächennachvernetzung wird üblicherweise so durchgeführt, dass eine Lösung des Oberflächennachvernetzers auf die getrockneten Polymerpartikel aufgesprüht wird. Im Anschluss an das Aufsprühen werden die mit Oberflächennachvernetzer beschichteten Polymerpartikel thermisch getrocknet, wobei die Oberflächennachvernetzungsreaktion sowohl vor als auch während der Trocknung stattfinden kann.

Das Aufsprühen einer Lösung des Oberflächennachvernetzers wird vorzugsweise in Mischern mit bewegten Mischwerkzeugen, wie Schneckenmischer, Scheibenmischer und Schaufelmischer, durchgeführt werden. Besonders bevorzugt sind Horizontalmischer, wie Schaufelmischer, ganz besonders bevorzugt sind Vertikalmischer. Die Unterscheidung in Horizontalmischer und Vertikalmischer erfolgt über die Lagerung der Mischwelle, d.h. Horizontalmischer haben eine horizontal gelagerte Mischwelle und Vertikalmischer haben eine vertikal gelagerte Mischwelle. Geeignete Mischer sind beispielsweise Horizontale Pflugschar® Mischer (Gebr. Lödige Maschinenbau GmbH; Paderborn; DE), Vrieco-Nauta Continuous Mixer (Hosokawa Micron BV; Doetinchem; NL), Processall Mixmill Mixer (Processall Incorporated; Cincinnati; US) und Schugi Flexomix® (Hosokawa Micron BV; Doetinchem; NL). Es ist aber auch möglich die O-berflächennachvernetzerlösung in einem Wirbelbett aufzusprühen.

Die Oberflächennachvernetzer werden typischerweise als wässrige Lösung eingesetzt. Über den Gehalt an nichtwässrigem Lösungsmittel bzw. Gesamtlösungsmittelmenge kann die Eindringtiefe des Oberflächennachvernetzers in die Polymerpartikel eingestellt werden.

Wird ausschließlich Wasser als Lösungsmittel verwendet, so wird vorteilhaft ein Tensid zugesetzt. Dadurch wird das Benetzungsverhalten verbessert und die Verklumpungsneigung vermindert. Vorzugsweise werden aber Lösungsmittelgemische eingesetzt, beispielsweise Isopropanol/Wasser, 1,3-Propandiol/Wasser und Propylenglykol/Wasser, wobei das Mischungsmassenverhältnis vorzugsweise von 20:80 bis 40:60 beträgt.

Die thermische Trocknung wird vorzugsweise in Kontakttrocknern, besonders bevorzugt Schaufeltrocknern, ganz besonders bevorzugt Scheibentrocknern, durchgeführt. Geeignete Trockner sind beispielsweise Hosokawa Bepex® Horizontal Paddle Dryer (Hosokawa Micron GmbH; Leingarten; DE), Hosokawa Bepex® Disc Dryer (Hosokawa Micron GmbH; Leingarten; DE) und Nara Paddle Dryer (NARA Machinery Europe; Frechen; DE). Überdies können auch Wirbelschichttrockner eingesetzt werden.

Die Trocknung kann im Mischer selbst erfolgen, durch Beheizung des Mantels oder Einblasen von Warmluft. Ebenso geeignet ist ein nachgeschalteter Trockner, wie beispielsweise ein Hordentrockner, ein Drehrohrofen oder eine beheizbare Schnecke. Besonders vorteilhaft wird in einem Wirbelschichttrockner gemischt und getrocknet.

Bevorzugte Trocknungstemperaturen liegen im Bereich 100 bis 250°C, bevorzugt 120 bis 220°C, besonders bevorzugt 130 bis 210°C, ganz besonders bevorzugt 150 bis 200°C. Die bevorzugte Verweilzeit bei dieser Temperatur im Reaktionsmischer oder Trockner beträgt vorzugsweise mindestens 10 Minuten, besonders bevorzugt mindestens 20 Minuten, ganz besonders bevorzugt mindestens 30 Minuten, und üblicherweise höchstens 60 Minuten.

Anschließend können die oberflächennachvernetzten Polymerpartikel erneut klassiert werden, wobei zu kleine und/oder zu große Polymerpartikel abgetrennt und in das Verfahren rückgeführt werden.

Die oberflächennachvernetzten Polymerpartikel können zur weiteren Verbesserung der Eigenschaften beschichtet oder nachbefeuchtet werden. Geeignete Beschichtungen zur Verbesserung der Anquellgeschwindigkeit sowie der Permeabilität (SFC) sind beispielsweise anorganische inerte Substanzen, wie wasserunlösliche Metallsalze, organische Polymere, kationische Polymere sowie zwei- oder mehrwertige Metallkationen. Geeignete Beschichtungen zur Staubbindung sind beispielsweise Polyole. Geeignete Beschichtungen gegen die unerwünschte Verbackungsneigung der Polymerpartikel sind beispielsweise pyrogene Kieselsäure, wie Aerosil® 200, und Tenside, wie Span® 20.

Die gemäß dem erfindungsgemäßen Verfahren hergestellten wasserabsorbierenden Polymerpartikel weisen einen Feuchtegehalt von vorzugsweise 0 bis 15 Gew.-%, besonders bevorzugt 0,2 bis 10 Gew.-%, ganz besonders bevorzugt 0,5 bis 8 Gew.-%, auf, wobei der Wassergehalt gemäß der von der EDANA empfohlenen Testmethode Nr. WSP 230.2-05 "Moisture Content" bestimmt wird.

Die gemäß dem erfindungsgemäßen Verfahren hergestellten wasserabsorbierenden Polymerpartikel weisen eine Zentrifugenretentionskapazität (CRC) von typischerweise mindestens 15 g/g, vorzugsweise mindestens 20 g/g, bevorzugt mindestens 22 g/g, besonders bevorzugt mindestens 24 g/g, ganz besonders bevorzugt mindestens 26 g/g, auf. Die Zentrifugenretentionskapazität (CRC) der wasserabsorbierenden Polymerpartikel beträgt üblicherweise weniger als 60 g/g. Die Zentrifugenretentionskapazität (CRC) wird gemäß der von der EDANA empfohlenen Testmethode Nr. WSP 241.2-05 "Centrifuge Retention Capacity" bestimmt.

Die gemäß dem erfindungsgemäßen Verfahren hergestellten wasserabsorbierenden Polymerpartikel weisen eine Absorption unter einem Druck von 49,2 g/cm² von typischerweise mindestens 15 g/g, vorzugsweise mindestens 20 g/g, bevorzugt mindestens 22 g/g, besonders bevorzugt mindestens 24 g/g, ganz besonders bevorzugt mindestens 26 g/g, auf. Die Absorption unter einem Druck von 49,2 g/cm² der wasserabsorbierenden Polymerpartikel beträgt üblicherweise weniger als 35 g/g. Die Absorption unter einem Druck von 49,2 g/cm² wird analog der von der EDANA empfohlenen Testmethode Nr. WSP 242.2-05 "Absorption under Pressure" bestimmt, wobei statt eines Drucks von 21,0 g/cm² ein Druck von 49,2 g/cm² eingestellt wird.

Die EDANA-Testmethoden sind beispielsweise erhältlich bei der EDANA, Avenue Eugene Plasky 157, B-1030 Brüssel, Belgien.

## Patentansprüche

1. Verfahren zur Herstellung wasserabsorbierender Polymerpartikel durch Polymerisation einer Monomerlösung oder -suspension, enthaltend
a) mindestens ein ethylenisch ungesättigtes, säuregruppentragendes Monomer, das zumindest teilweise neutralisiert sein kann,
b) mindestens einen Vernetzer,
c) mindestens einen Initiator,
d) optional ein oder mehrere mit den unter a) genannten Monomeren copolymerisierbare ethylenisch ungesättigte Monomere und
e) optional ein oder mehrere wasserlösliche Polymere,
umfassend Trocknung, Mahlung und Klassierung mittels mindestens einer Taumelsiebmaschine, **dadurch gekennzeichnet, dass** die zur Klassierung eingesetzte Taumelsiebmaschine mit mindestens einer Ballklopfreinigung, bestehend aus einem Auflageboden mit elastischen Bällen unterhalb eines Siebes, ausgerüstet ist, die Bälle einen Anfangsdurchmesser x aufweisen und der Auflageboden Durchlassöffnungen für Partikel mit einem maximalen Partikeldurchmesser y aufweist, wobei y kleiner ist als x, und mitgerissene elastische Bälle außerhalb der Taumelsiebmaschine mittels einer Fangeinrichtung abgetrennt werden, wobei die Fangeinrichtung Durchlassöffnungen für Partikel mit einem maximalen Partikeldurchmesser z aufweist, wobei z kleiner ist als y.

2. Verfahren gemäß Anspruch 1, **dadurch gekennzeichnet, dass** oberflächennachvernetzte wasserabsorbierende Polymerpartikel in der Taumelsiebmaschine klassiert werden.

3. Verfahren gemäß Anspruch 1 oder 2, **dadurch gekennzeichnet, dass** der Anfangsdurchmesser der elastischen Bälle x von 15 bis 40 mm beträgt.

4. Verfahren gemäß einem der Ansprüche 1 bis 3, **dadurch gekennzeichnet, dass** die elastischen Bälle aus Naturkautschuk, silikonmodifiziertem Ethylen-Propylen-Dien-Kautschuk, Nitril-Butadien-Kautschuk, Styrol-Butadien-Kautschuk oder Polyurethan sind.

5. Verfahren gemäß einem der Ansprüche 1 bis 4, **dadurch gekennzeichnet, dass** der Auflageboden Durchlassöffnungen für Partikel mit einem Partikeldurchmesser y aufweist, wobei y von 1 bis 20 mm kleiner ist als x.

6. Verfahren gemäß einem der Ansprüche 1 bis 5, **dadurch gekennzeichnet, dass** die Durchlassöffnungen im Auflageboden kreisförmig sind.

7. Verfahren gemäß einem der Ansprüche 1 bis 6, **dadurch gekennzeichnet, dass** die Fangeinrichtung Durchlassöffnungen für Partikel mit einem Partikeldurchmesser z aufweist, wobei z von 0,1 bis 10 mm kleiner ist als y.

8. Verfahren gemäß einem der Ansprüche 1 bis 7, **dadurch gekennzeichnet, dass** die Fangeinrichtung ein Magnetabscheider mit parallel angeordneten Rohrmagneten ist.

9. Verfahren gemäß Anspruch 8, **dadurch gekennzeichnet, dass** sich zwischen jeweils zwei Rohrmagneten mindestens ein weiterer Stab befindet, der selber kein Rohrmagnet ist.

10. Verfahren gemäß einem der Ansprüche 1 bis 9, **dadurch gekennzeichnet, dass** die mitgerissenen elastischen Bälle mittels der Fangeinrichtung kontinuierlich ausgeschleust werden.

11. Verfahren gemäß Anspruch 10, **dadurch gekennzeichnet, dass** die Fangeinrichtung eine Neigung von mindestens 30° gegenüber der Horizontalen aufweist.

12. Verfahren gemäß einem der Ansprüche 1 bis 11, **dadurch gekennzeichnet, dass** die wasserabsorbierenden Polymerpartikel eine Zentrifugenretentionskapazität von mindestens 15 g/g aufweisen.

## Claims

1. A process for producing water-absorbing polymer particles by polymerizing a monomer solution or suspension comprising
a) at least one ethylenically unsaturated monomer which bears acid groups and may be at least partially neutralized,
b) at least one crosslinker,
c) at least one initiator,
d) optionally one or more ethylenically unsaturated monomers copolymerizable with the monomers mentioned under a) and
e) optionally one or more water-soluble polymers,
comprising drying, grinding and classifying by means of at least one tumbler screening machine, wherein the tumbler screening machine used for classification is equipped with at least one ball knock cleaning system consisting of a base tray with elastic balls below a screen, the balls have a starting diameter x and the base tray has passage orifices for particles with a maximum particle diameter y, where y is less than x, and entrained elastic balls are removed outside the tumbler screening machine by means of a capture device, said capture device having passage orifices for particles with a maximum particle diameter z, where z is less than y.

2. The process according to claim 1, wherein surface postcrosslinked water-absorbing polymer particles are classified in the tumbler screening machine.

3. The process according to claim 1 or 2, wherein the starting diameter of the elastic balls x is from 15 to 40 mm.

4. The process according to any one of claims 1 to 3, wherein the elastic balls are made of natural rubber, silicone-modified ethylene-propylene-diene rubber, nitrile-butadiene rubber, styrenebutadiene rubber or polyurethane.

5. The process according to any one of claims 1 to 4, wherein the base tray has passage orifices for particles with a particle diameter y, where y is from 1 to 20 mm smaller than x.

6. The process according to any one of claims 1 to 5, wherein the passage orifices in the base tray are circular.

7. The process according to any one of claims 1 to 6, wherein the capture device has passage orifices for particles with a particle diameter z, where z is from 0.1 to 10 mm less than y.

8. The process according to any one of claims 1 to 7, wherein the capture device is a magnetic separator with tube magnets arranged in parallel.

9. The process according to claim 8, wherein at least one further bar which is not itself a tube magnet is present between two tube magnets in each case.

10. The process according to any one of claims 1 to 9, wherein the entrained elastic balls are discharged continuously by means of the capture device.

11. The process according to claim 10, wherein the collecting device has an inclination of at least 30° to the horizontal.

12. The process according to any one of claims 1 to 11, wherein the water-absorbing polymer particles have a centrifuge retention capacity of at least 15 g/g.

## Revendications

1. Procédé pour la préparation de particules polymères absorbant l'eau par polymérisation d'une solution ou d'une suspension de monomères, contenant
a) au moins un monomère éthyléniquement insaturé, portant des groupes acides, qui peut être au moins partiellement neutralisé,
b) au moins un réticulant,
c) au moins un initiateur,
d) éventuellement un ou plusieurs monomères éthyléniquement insaturés copolymérisables avec les monomères cités en a) et
e) éventuellement un ou plusieurs polymères solubles dans l'eau,
comprenant le séchage, le broyage et la classification au moyen d'au moins un cribleur oscillant, **caractérisé en ce que** le cribleur oscillant utilisé pour la classification est équipé d'au moins un dispositif de nettoyage par frappe de balles, constitué par un fond de support présentant des balles élastiques sous un tamis, les balles présentent un diamètre de départ x et le fond de support présente des ouvertures traversantes pour des particules présentant un diamètre maximal de particule y, y étant inférieur à x, et des balles élastiques entraînées sont séparées en dehors du cribleur oscillant au moyen d'un dispositif de piégeage, le dispositif de piégeage présentant des ouvertures traversantes pour des particules présentant un diamètre maximal de particule z, z étant inférieur à y.

2. Procédé selon la revendication 1, **caractérisé en ce que** des particules polymères absorbant l'eau postréticulées en surface sont classifiées dans le cribleur oscillant.

3. Procédé selon la revendication 1 ou 2, **caractérisé en ce que** le diamètre de départ des balles élastiques x est de 15 à 40 mm.

4. Procédé selon l'une quelconque des revendications 1 à 3, **caractérisé en ce que** les balles élastiques sont en caoutchouc naturel, en caoutchouc d'éthylène-propylène-diène modifié par de la silicone, en caoutchouc de nitrile-butadiène, en caoutchouc de styrène-butadiène ou en polyuréthane.

5. Procédé selon l'une quelconque des revendications 1 à 4, **caractérisé en ce que** le fond de support présente des ouvertures traversantes pour des particules présentant un diamètre de particule y, y étant inférieur à x de 1 à 20 mm.

6. Procédé selon l'une quelconque des revendications 1 à 5, **caractérisé en ce que** les ouvertures traversantes dans le fond de support sont circulaires.

7. Procédé selon l'une quelconque des revendications 1 à 6, **caractérisé en ce que** le dispositif de piégeage présente des ouvertures traversantes pour des particules présentant un diamètre de particule z, z étant inférieur à y de 0,1 à 10 mm.

8. Procédé selon l'une quelconque des revendications 1 à 7, **caractérisé en ce que** le dispositif de piégeage est un séparateur magnétique présentant des aimants tubulaires disposés parallèlement.

9. Procédé selon la revendication 8, **caractérisé en ce qu'**une autre tige, qui, elle-même, n'est pas un aimant tubulaire, se situe entre à chaque fois deux aimants tubulaires.

10. Procédé selon l'une quelconque des revendications 1 à 9, **caractérisé en ce que** les billes élastiques entraînées sont évacuées en continu au moyen du dispositif de piégeage.

11. Procédé selon la revendication 10, **caractérisé en ce que** le dispositif de piégeage présente une inclinaison d'au moins 30° par rapport à l'horizontale.

12. Procédé selon l'une quelconque des revendications 1 à 11, **caractérisé en ce que** les particules polymères absorbant l'eau présentent une capacité de rétention dans une centrifugeuse d'au moins 15 g/g.
